# EUROPEAN PATENT APPLICATION

(11) **EP 4 752 756 A1**
(43) Date of publication of application: **03.06.2026**
(21) Application number: 24905162.4
(22) Date of filing: 29.08.2024
(51) Int. Cl.: G06F 16/9535

(54) **METHOD AND APPARATUS FOR FEATURE LEARNING, DEVICE, MEDIUM, AND PROGRAM PRODUCT**

(71) Applicant: Lemon Inc., Grand Cayman, KY1-1205 (KY); BEIJING YOUZHUJU NETWORK TECHNOLOGY CO. LTD., Beijing 101299 (CN)
(72) Inventor: YE, Wenting, Los Angeles, California 90066 (US); BARATI, Elaheh, Los Angeles, California 90066 (US); JIANG, Dongcan, Los Angeles, California 90066 (US); CHEN, Zheng, Los Angeles, California 90066 (US); ZHOU, Yunzhi, Los Angeles, California 90066 (US); ZHANG, Lizhe, Beijing 100028 (CN)
(74) Representative: Isarpatent
(86) International application number: PCT/CN2024/115670
(87) International publication number: WO 2026/044636

(57) **Abstract**

In a method for feature learning, first and second datasets are obtained. The first dataset includes first behavior data, indicating whether an object performs click and conversion behaviors on recommended content, of a first group of objects on a target application. The second dataset includes second behavior data, indicating whether the object performs a click behavior on the recommended content, of a second group of objects on the target application. Based on a union of the first and second datasets, training samples respectively corresponding to objects are generated. Each traning sample includes attribute information of an object and labels. The first and second label respectively indicate whether the object performs a click behavior and whether the object performs a conversion behavior or indicating a predetermined indicator. An object feature extraction model is trained with training samples, and is configured to extract a feature embedding corresponding to the object.

## Description

### FIELD

Example embodiments of the disclosure generally relate to the field of computer technologies, and in particular, to a method, an apparatus, a device, a computer-readable storage medium, and a computer program product for feature learning.

### BACKGROUND

Feature embedding is an important component in machine learning systems or model processing. The feature embedding is a vector having an appropriate dimension for characterizing raw data. For example, during performing a prediction task for an object, the input of the prediction task generally includes at least data related to the object, and the output is a prediction result. An accurate prediction process provides similar prediction results for similar objects. For example, when predicting whether a user will purchase a commodity, the input of the prediction task is data related to the user and data related to the commodity, and the output is a probability that the user purchases the commodity. When the prediction model is used to perform the probability prediction task, it is expected that the prediction model may give similar prediction probabilities for users with similar features. In this way, the data related to the users with similar features is characterized by vectors (i.e., feature embeddings) that are close in distance as the input, so that the prediction result can be more in line with expectations.

### SUMMARY

In a first aspect of the disclosure, a feature learning method is provided. The method includes: obtaining a first dataset and a second dataset, the first dataset including first behavior data of a first group of objects on a target application, the second dataset including second behavior data of a second group of objects on the target application, the first behavior data indicating whether an object performs a click behavior and a conversion behavior on the recommended content, and the second behavior data indicating whether the object performs a click behavior on the recommended content; generating, based on a union of the first dataset and the second dataset, a plurality of training samples respectively corresponding to a plurality of objects, each training sample including attribute information of an object and a plurality of labels, a first label of the plurality of labels indicating whether the object performs a click behavior on the recommended content, and a second label of the plurality of labels indicating whether the object performs a conversion behavior on the recommended content or indicating a predetermined indicator; and training an object feature extraction model with the plurality of training samples, the object feature extraction model being configured to extract, based on attribute information of an input object, a feature embedding corresponding to the object.

In a second aspect of the disclosure, an apparatus for feature learning is provided. The apparatus includes: an obtaining module configured to obtain a first dataset and a second dataset, the first dataset including first behavior data of a first group of objects on a target application, the second dataset including second behavior data of a second group of objects on the target application, the first behavior data indicating whether an object performs a click behavior and a conversion behavior on the recommended content, and the second behavior data indicating whether the object performs a click behavior on the recommended content; a generating module configured to generate, based on a union of the first dataset and the second dataset, a plurality of training samples respectively corresponding to a plurality of objects, each training sample including attribute information of an object and a plurality of labels, a first label of the plurality of labels indicating whether the object performs a click behavior on the recommended content, and a second label of the plurality of labels indicating whether the object performs a conversion behavior on the recommended content or indicating a predetermined indicator; and a training module configured to train an object feature extraction model with the plurality of training samples, the object feature extraction model being configured to extract, based on attribute information of an input object, a feature embedding corresponding to the object.

In a third aspect of the disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the disclosure, a computer-readable storage medium is provided. The medium has a computer program stored thereon, and the computer program, when executed by a processor, implements the method of the first aspect.

In a fifth aspect of the disclosure, a computer program product is provided. The computer program product is tangibly stored in a computer storage medium and includes computer-executable instructions that, when executed by a device, cause the device to perform the method of the first aspect.

It should be understood that the content described in this section is not intended to limit the key features or major features of the embodiments of the disclosure, nor is it intended to limit the scope of the disclosure. Other features of the disclosure will become readily understood from the following description.

### BRIEF DESCRIPTION OF DRAWINGS

The above and other features, advantages, and aspects of various embodiments of the disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the disclosure may be implemented;
FIG. 2 illustrates a schematic diagram of a process of feature learning according to a conventional solution;
FIG. 3 illustrates a flowchart of a process for feature learning according to some embodiments of the disclosure;
FIG. 4 illustrates a schematic diagram of a model training and application environment in which embodiments of the disclosure may be implemented;
FIG. 5 illustrates a flowchart of a process for feature learning according to some embodiments of the disclosure;
FIG. 6 illustrates a block diagram of an apparatus for feature learning according to some embodiments of the disclosure; and
FIG. 7 illustrates a block diagram of an electronic device in which one or more embodiments of the disclosure may be implemented.

### DETAILED DESCRIPTION

Embodiments of the disclosure will be described in more detail below with reference to the accompanying drawings. While certain embodiments of the disclosure are shown in the accompanying drawings, it should be understood that the disclosure may be implemented in various forms, and should not be construed as limited to the embodiments set forth herein, but rather, these embodiments are provided for a more thorough and complete understanding of the disclosure. It should be understood that the drawings and embodiments of the disclosure are for illustrative purposes only and are not intended to limit the scope of the disclosure.

In the description of the embodiments of the disclosure, the terms "including" and the like should be understood as an open-ended inclusion, i.e., "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

It may be understood that the data involved in the technical solution (including but not limited to the data itself, the acquisition or use of the data) should follow the requirements of the corresponding laws and regulations and related provisions.

It can be understood that, before the technical solutions disclosed in the embodiments of the disclosure are used, the type, the usage scope, the usage scenario, and the like of personal information related to the disclosure should be notified to the user in an appropriate manner according to the relevant laws and regulations, and the authorization should be obtained from the user.

For example, in response to receiving an active request from a user, prompt information is sent to the user to explicitly prompt the user that the requested operation will need to obtain and use personal information of the user, so that the user can autonomously select whether to provide personal information to software or hardware, such as an electronic device, an application, a server or a storage medium, executing the operation of the technical solution of the disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process is merely illustrative, and does not constitute a limitation on implementations of the disclosure, and other manners of meeting related laws and regulations may also be applied to implementations of the disclosure.

As used herein, the term "model" may learn an association relationship between respective inputs and outputs from training data such that a corresponding output may be generated for a given input after training is completed. The generation of the model may be based on machine learning techniques. Deep learning is a machine learning algorithm that processes the input and provides the corresponding output by using a multilayer processing unit. The neural network model is one example of a deep learning-based model. As used herein, the "model" may also be referred to as a "machine learning model", a "learning model", a "machine learning network", or a "learning network", which terms are used interchangeably herein.

The "neural network" is a deep learning-based machine learning network. The neural network is capable of processing inputs and providing respective outputs, which generally includes an input layer and an output layer and one or more hidden layers between the input layer and the output layer. The neural network used in the deep learning application generally includes many hidden layers, increasing the depth of the network. Various layers of the neural network are connected in sequence such that the output of the previous layer is provided as an input to the next layer, where the input layer receives the input of the neural network and the output of the output layer serves as the final output of the neural network. Each layer of the neural network includes one or more nodes (also referred to as processing nodes or neurons), each node processing input from the previous layer.

Generally, the machine learning may generally include three stages, a training stage, a testing stage, and an application stage (also referred to as an inference stage). At the training stage, a given model may be trained using a large amount of training data, constantly updating parameter values, until the model is able to obtain consistent inferences from the training data that satisfy the expected objectives. By training, the model may be considered to be able to learn, from the training data, an association from the input to the output (also referred to as mapping of the input to the output). The parameter values of the trained model are determined. In the testing stage, the test input is applied to the trained model, to test whether the model can provide the correct output, thereby determining the performance of the model. In the application stage, the model may be used to process the actual input based on the parameter value obtained by training to determine the corresponding output.

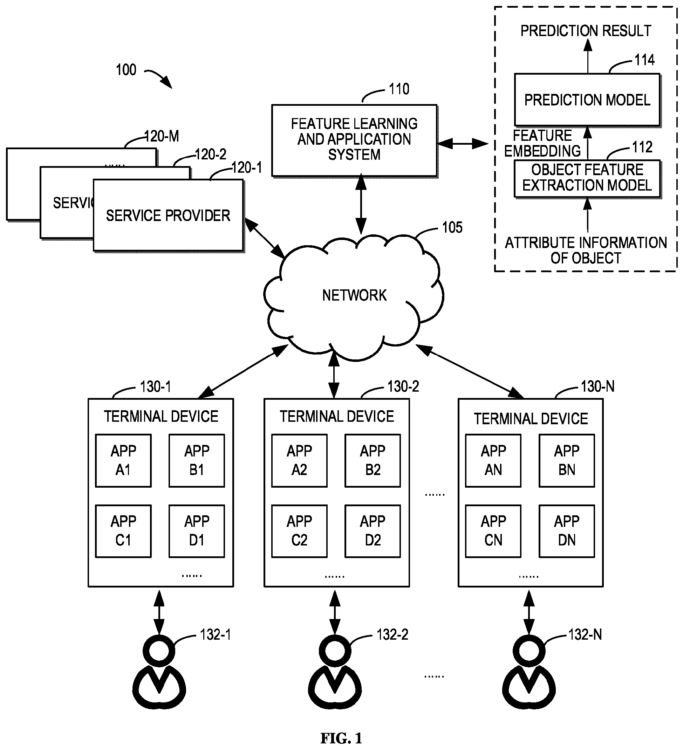

FIG. 1 illustrates a schematic diagram of an example environment 100 in which embodiments of the disclosure may be implemented. In the environment 100, a feature learning and application system 110 is configured to train and apply an object feature extraction model 112 (which may also sometimes be referred to as a UE model) and a prediction model 114 to perform a prediction result for an object in a predetermined prediction task. The object feature extraction model 112 is configured to extract, based on attribute information of an input object, a feature embedding corresponding to the object.

The prediction task for the object may be defined in different scenarios. The object herein may include various entities in different scenarios, such as users, user groups, audience groups, organizations, teams, units, and the like.

For example, in a recommendation scenario, if it is desired to recommend content to a user or an audience group, the prediction task may include a degree of correlation between a predicted object (i.e., the user or the audience group) and a recommended content item, so as to recommend more satisfying content to the audience group. The recommended content items refer to content or resources to be recommended, examples of which may include applications, physical goods, virtual goods, articles, audio and video content, and the like. An example prediction model for implementing such a prediction task may include an object response prediction to predict a probability that the object makes a response to the recommended content item. In some example applications, such a prediction model may include a conversion rate prediction (PVR) model for predicting whether the user or audience group will perform a conversion response to a certain recommended content item, such as downloading an application, purchasing a commodity, reading an article, or the like.

In addition to the above examples of prediction tasks, there may also be predictions for the objects themselves, as well as predictions for objects with respect to additional content or items, etc.

In a prediction task involving an object, in order to obtain a more accurate prediction result, the input of the prediction task generally includes data related to the object. The data may be a plurality of fields that may be attribute information describing different aspects of the object.

In embodiments herein, it is assumed that the input of the prediction task of the prediction model 114 includes data that is presented on the application with the object. For example, the data required for the prediction task includes behavior data of the object on the application, for example, behavior data such as clicking, browsing, purchasing, liking, commenting, or the like. The data of the object on different applications may characterize features of the object, thereby facilitating to perform the prediction. Depending on the application needs, the prediction model 114 may be constructed to include various types of model architectures, for example, may include a deep neural network (DNN) architecture. The specific types and structures of the prediction model 114 are not limited in the embodiments of the disclosure.

As shown in FIG. 1, objects 132-1, 132-2, ..., 132-N (collectively or individually referred to as objects 132 for ease of discussion) may use one or more applications on a terminal device by one or more terminal devices 130-1, 130-2, ..., 130-N, etc. (collectively or individually referred to as terminal devices 130 for ease of discussion). Different applications in the terminal device 130 may receive, via the network 105, recommended content from corresponding service providers, such as service providers 120-1, 120-2, ..., 120-M (for ease of discussion, collectively or individually referred to as service providers 120). The service provider 120 or a third party may request the delivery of recommended content to an application in the terminal device 130.

In some embodiments, for the recommended content requested to be delivered by the service provider 120 to a certain application in the terminal device 130, the conversion response may be completed through the same application or another application in the terminal device 130. For example, recommended content requested to be delivered by the service provider 120 to an application A1 in the terminal device 130-1 may be clicked by the object 132-1 in the application A1 and complete conversion behavior such as purchasing or the like in the application A1, or may be clicked by the object 132-1 in the application A1 and lead to a redirection to an application B1 to complete conversion behavior such as purchasing or the like.

For a case where the click behavior and the conversion behavior of the object 132-1 are completed in the application A1 and the application B1 respectively, the platform corresponding to the application A1 cannot know the behavior of the object 132-1 executing in the application B1. Thus, for an application platform, such a user may be referred to herein as a conversion-untrackable user, or simply referred to as an untrackable user. For the object 132 that clicks and completes the conversion behavior in the same application, it may be referred to as a conversion-trackable user of the application platform, or simply referred to as a trackable user.

In the environment 100, the terminal device 130 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio / video player, a digital camera / camcorder, a positioning device, a television receiver, a radio broadcast receiver, an electronic book device, a gaming device, or any combination of the foregoing, including accessories and peripherals of these devices, or any combination thereof. In some embodiments, the terminal device 130 may also support any type of interface for a user (such as a "wearable" circuit, etc.). The model training and application system 110 may be implemented, for example, in various types of computing systems / servers capable of providing computing power, including, but not limited to, mainframes, edge computing nodes, computing devices in a cloud environment, and the like.

It should be understood that the structures and functions of various elements in the environment 100 are described for illustrative purposes only and do not imply any limitation to the scope of the disclosure.

Given the data security and privacy, behavior data related to the object that is required for the training and use of the predictive model 114 and the object feature extraction model 112 may be subject to various constraints, and the data may be collected, stored, and used after authorization is obtained. These constraints and authorization involve multiple parties, including the object 132, the terminal device 130 running an application, and / or the service provider 120.

Currently, the terminal device 130 running an application may require the user to explicitly authorize the use of behavior data for each application. For example, if the recommended content (e.g., an advertisement) is delivered in the application of the terminal device, the user is required to authorize the application provider and the service provider 120 to use the behavior data. Otherwise, behavior data of user granularity and corresponding conversion data will not be collected and used.

It is assumed that in the recommendation related prediction task, the required input data is a click behavior for an advertisement, a download behavior, a purchase behavior for a product recommended in the advertisement, and the like of the user on the application.

When the authorization is obtained, the behavior data of the user granularity may be located through a corresponding identifier, that is, the behavior data related to different users may be distinguished. For example, if behavior data is collected from the application A1 of the terminal device 130-1, the behavior data may be associated to an identifier capable of identifying the terminal device and an identifier of the application A1. For example, the identifier for identifying the terminal device may include an identifier for advertising (IDFA), and the IDFA may be shared by different applications under the same device. That is, for an application that is downloaded to different terminal devices, it may be located to a specific terminal device through the IDFA, and the terminal device may be considered to correspond to a user.

In the input of a prediction task, distinguishing behavior data of different objects is important because different objects may exhibit different behavior features and should be associated to different prediction results. For example, different users or audience groups may be interested in different recommended content. If the behavior data of the object granularity is lacked, it may be difficult to comprehensively describe the features of the object.

During model processing, the data related to the object, that is, behavior data, is mapped into a feature embedding in a vector form by an embedding mapping relationship. This feature embedding is considered to be able to characterize the corresponding object. Through the object feature extraction model 112 in FIG. 1, the feature embedding of the object may be extracted. Extracting feature embeddings may have many uses. For example, by comparing feature embeddings of a plurality of objects, a similarity between objects may be determined, etc.

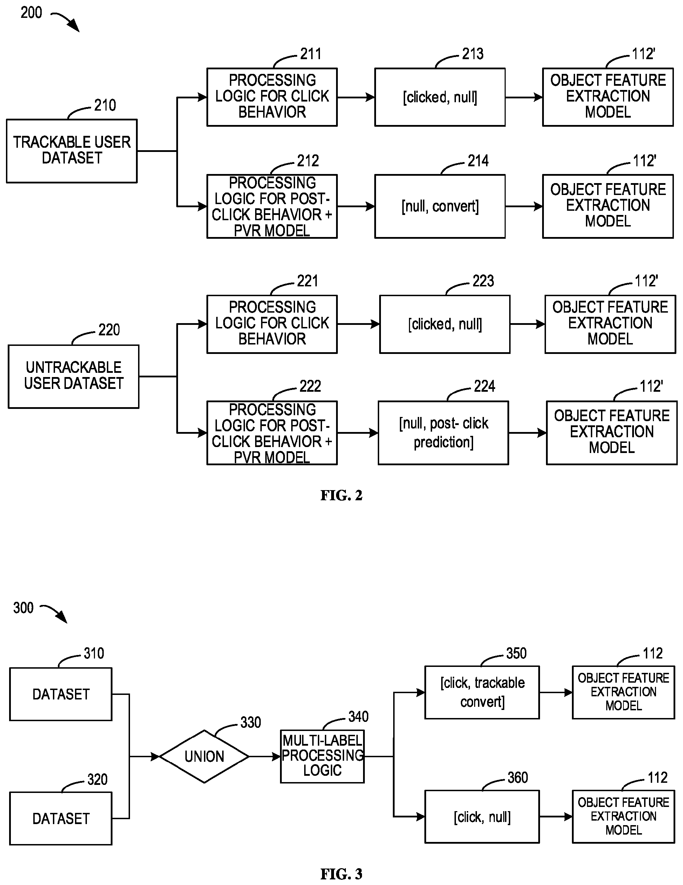

In a conventional solution, different behavior data for different objects may be separately trained during model training. FIG. 2 illustrates a schematic diagram of a process 200 of feature learning according to a conventional solution. The process 200 includes a process of separately training models for a dataset 210 of behavioral data of the trackable user and a dataset 220 of behavioral data of the untrackable user, respectively.

When the object feature extraction model 112' is trained with the dataset of the trackable user 210, the behavior data related to the click behavior is used as a data stream for processing in its corresponding processing logic. The behavior data related to the conversion behavior (including actual converted behavior data after the click behavior and behavior data predicted to be converted) is used as a data stream, and may be processed in the processing logic after the click behavior and a PVR model 212.

When the corresponding processing at block 211 is performed for the dataset 210 of the trackable user, a label of the corresponding click behavior data may be marked as [clicked, null] at block 213, where "clicked" may represent that the click behavior has been performed, and "null" may represent that the conversion behavior is not tracked. When performing the corresponding processing at block 212, a label of the corresponding behavior data related to the conversion behavior may be marked as [null, convert] at block 214, where "null" may represent that the click behavior is not tracked, and "convert" may represent the conversion behavior that is actually performed and the conversion behavior that is predicted to be performed. Then, the object feature extraction model 112' is trained with labels at blocks 213 and 214, respectively.

When the corresponding processing at block 221 is performed for a dataset 220 of the non-trackable user, a label of the corresponding click behavior data may be marked as [clicked, null] at block 223, where "clicked" may represent that the click behavior has been performed, and "null" may represent that the conversion behavior is not tracked. When the corresponding processing is performed at block 222, a label of the corresponding behavior data related to the conversion behavior may be marked as [null, convert] at block 224, where "null" may represent that the click behavior is not tracked, and "post-click prediction" may represent the conversion behavior that is predicted to be performed (because the untraceable user does not have the conversion behavior actually performed). Then, the object feature extraction model 112' is trained with labels at blocks 223 and 224, respectively.

However, the feature learning process of such a conventional solution has the following problems.
1) The feature learning for trackable users and untrackable users may be biased. The untrackable users may be underestimated because they have lower transmission and cost. This is mainly caused by an additional clicked signal (or called behavior) of the traceable users.
2) A risk of over-fitting may exist. The model will be trained twice for the same request for clicking and converting, respectively. The model may memorize data, but lack generalization capability.
3) The training efficiency is low, with an estimated waste of about 50% of computations.
4) There is an inconsistency between online and offline performances, and the offline performance is overestimated due to label leakage.

An embodiment of the disclosure provides a solution of feature learning. According to various embodiments of the disclosure, a first dataset and a second dataset are obtained. The first dataset includes first behavior data of a first group of objects on a target application. The second dataset includes second behavior data of a second group of objects on the target application. The first behavior data indicates whether an object performs a click behavior and a conversion behavior on recommended content, and the second behavior data indicates whether the object performs a click behavior on the recommended content. Then, based on a union of the first dataset and the second dataset, a plurality of training samples respectively corresponding to a plurality of objects are generated. Each training sample includes attribute information of an object and a plurality of labels. A first label of the plurality of labels indicates whether the object performs a click behavior on the recommended content, and a second label of the plurality of labels indicates whether the object performs a conversion behavior on the recommended content or indicates a predetermined indicator. Correspondingly, an object feature extraction model is trained with the plurality of training samples. The object feature extraction model is configured to extract, based on attribute information of an input object, a feature embedding corresponding to the object.

**In** this way, by constructing a plurality of labels in a training sample corresponding to an object according to a unified strategy, a feature learning deviation between a user whose conversion behavior is trackable and a user whose conversion behavior is untrackable can be avoided in this solution. In addition, the training sample is constructed with the union of the first dataset and the second dataset, and it may be determined that only one training sample is constructed for one object to represent the click behavior and the conversion behavior of the object on a certain recommended content. This avoids the risk of overfitting due to construction of a plurality of training samples for clicking and converting of the same object respectively. Furthermore, on the basis of the dataset merging and the multi-label training sample, the training efficiency of the object feature extraction model can be remarkably improved. In addition, since the plurality of labels may respectively indicate whether each object performs a click on the recommended content, and also indicates whether to perform conversion on the recommended content (or explicitly indicates that the conversion behavior is not known), the problem of label leakage can be avoided, and the trained model performance is improved.

Some example embodiments of the disclosure will be described below with reference to the accompanying drawings.

FIG. 3 illustrates a flowchart of a process 300 for feature learning according to some embodiments of the disclosure. For ease of discussion, description will be made with reference to FIG. 1. The process 300 may be implemented at the feature learning and application system 110.

**In the** process 300, the feature learning and application system 110 may obtain a dataset 310 and a dataset 320. The dataset 310 may include first behavior data of a first group of objects on a target application, and the first behavior data may indicate whether the object performs a click behavior and a conversion behavior on the recommended content. Such a first group of objects may include, for example, the aforementioned trackable users capable of performing a click behavior and a conversion behavior on the recommended content provided by the service provider 120 in the target application. The click behavior may include, for example, a behavior of clicking and viewing the recommended content when the first group of objects browse the recommended content in the target application. The conversion behavior may include, for example, a behavior of downloading, purchasing, etc. the recommended content viewed after clicking by the first group of objects. It should be understood that the conversion behavior may be set according to different application scenarios, which is not limited herein.

The dataset 320 may include second behavior data of a second group of objects on the target application, and the second behavior data may indicate whether the object performs a click behavior on the recommended content. Such a second group of objects may include, for example, the aforementioned untrackable user, which is merely capable of performing a click behavior on the recommended content provided by the service provider 120 in the target application, as an example. For the conversion behavior performed by the untrackable user on an application other than the target application, it is not available for the feature learning and application system 110 without user authorization or under other circumstances. In addition, data that can be obtained on the target application may also be referred to as on-site data. Correspondingly, data that cannot be obtained on the target application may also be referred to as off-site data.

It should be understood that in FIG. 3, different datasets are distinguished only based on the traceability of the behavior data. However, in practice, for the behavior data of the trackable user or the behavior data of the untrackable user, the acquired and stored datasets may be in plural.

Further, based on a union 330 of the dataset 310 and the dataset 320, the feature learning and application system 110 may generate a plurality of training samples respectively corresponding to a plurality of objects. Each training sample may include attribute information of an object and a plurality of labels. Based on such training samples, multi-label processing logic (340) may be executed. As an example, the attribute information of the object may include, for example, related information of whether the object belongs to a trackable user or a untrackable user. For example, the data in the dataset may be added with an identifier of the object attribute, for example, a related field or the like, so that the generated training sample includes attribute information of the object.

Based on the multi-label processing logic (340), a first label of the plurality of labels may indicate whether the object performs a click behavior on the recommended content. A second label of the plurality of labels may indicate whether the object performs a conversion behavior on the recommended content or indicates a predetermined indicator. In some embodiments, the predetermined indicator may indicate that the conversion behavior of the object is untrackable. Such a predetermined indicator may be, for example, an indicator representing "null" such as null. As an example, an array may be used as a representation form of the label. Assuming that one training sample includes attribute information that the object belongs to the trackable user, a corresponding array of the plurality of labels may be represented as [click, trackable convert] at block 350. The "click" may represent the first label to indicate whether the object performs a click behavior on the recommended content. The "trackable convert" may may represent the second label to indicate whether the object performs a conversion behavior on the recommended content. Assuming that another training sample includes attribute information of the object that the object belongs to the non-trackable user, the corresponding array of the plurality of labels may be represented as [click, null] at block 360, where "null" may represent the second label to indicate that the conversion behavior of the object is untrackable.

In some embodiments, when generating the plurality of training samples respectively corresponding to the plurality of objects based on the union of the dataset 310 and the dataset 320, based on an object identifier of the first object, the feature learning and application system 110 may determine behavior data of the first object from first behavior data of the dataset 310 and second behavior data of the dataset 320, and may generate a first training sample corresponding to the first object based on the behavior data of the first object. The first object may be an object of the plurality of objects.

The object identifier may include, for example, an identifier discussed above for indicating object attribute (e.g., whether the object belongs to a trackable user or an untrackable user). When the training sample is generated, the corresponding attribute information may be determined based on the object identifier of the object. The object identifier may further include an identifier for indicating an execution behavior (for example, a click behavior, a purchase behavior, or the like) of the object in the target application. Such an identifier may be pre-added to the behavior data for each dataset. The form of the identifier may include, for example, an expression form of texts and / or symbols, and/or the like. It should be understood that the form of the object identifier is not limited herein.

In some embodiments, when the first training sample corresponding to the first object is generated based on the behavior data of the first object, based on the behavior data of the first object indicating whether the first object performs the click behavior on the recommended content, the feature learning and application system 110 may determine the first label in the first training sample corresponding to the first object.

Since the first behavior data included in the dataset 310 may indicate whether the object performs the click behavior and the conversion behavior on the recommended content, and the second behavior data included in the dataset 320 may indicate whether the object performs the click behavior on the recommended content, the first label in the corresponding training sample may be determined based on the behavior data of a certain object indicating whether the object performs a click behavior on the recommended content. For example, it may be determined whether a specific value of the first label "click" in the label array is 0 (which may represent that the click behavior is not performed) or 1 (which may represent that the click behavior is performed). It should be understood that any other suitable value or symbol and the like may be used to respectively represent that the first object has performed the click behavior and does not perform the click behavior.

In some embodiments, if the behavior data of the first object includes an indication of whether the first object performs a conversion behavior on the recommended content, the feature learning and application system 110 may determine the second label in the first training sample based on the indication of whether the first object performs the conversion behavior on the recommended content.

Because the first behavior data included in the dataset 310 for the first group of objects (for example, the trackable users) may indicate whether the object performs the conversion behavior on the recommended content, the second label in the corresponding training sample may be determined based on the behavior data of the object indicating whether the object performs the conversion behavior on the recommended content. For example, it may be determined whether a specific value of the second label "trackable convert" in the label array is 0 (which may indicate that the conversion behavior is not performed) or 1 (which may indicate that the conversion behavior is performed). It should be understood that any other suitable values or symbols or the like may be used to respectively represent that the first object has performed the conversion behavior and does not perform the conversion behavior.

In some embodiments, if the behavior data of the first object does not include an indication of whether the first object performs a conversion behavior on the recommended content, the feature learning and application system 110 may determine that the second label in the first training sample indicates the predetermined indicator.

Because the second behavior data included in the dataset 320 for the second group of objects (for example, the untrackable users) may only indicate whether the object performs the click behavior on the recommended content, but cannot indicate whether the object performs the conversion behavior on the recommended content, the second label in the corresponding training sample may be directly determined to indicate the predetermined indicator, such as "null". It should be understood that any other suitable symbol or value or the like may also be used to represent the predetermined indicator.

In the conventional solution for feature learning in FIG. 2, the prediction of the post-click behavior for the trackable user may be relatively accurate, while the prediction of post-click behavior for the untrackable user is less accurate because the untrackable user has substantially no post-click behavior. This results in almost no positive samples, but all negative samples, regarding the prediction of the conversion behavior. For the post-click behavior of the trackable user, that is, the conversion behavior is a positive sample with prediction and also an original direct conversion positive sample, and thus there is an unbalanced condition for the trackable user and the untrackable user in the prediction of the post-click behavior. Therefore, a model for post-click behavior prediction is not adopted in the embodiments of the disclosure.

Further, the feature learning and application system 110 may train the object feature extraction model 112 with a plurality of training samples, and the object feature extraction model 112 may be configured to extract a feature embedding corresponding to the object based on attribute information of an input object. The feature embedding of the object, that is extracted through the object feature model, may be used in a plurality of scenarios. For example, a similarity between a plurality of objects may be determined by comparing feature embeddings of the objects.

According to the embodiments of the disclosure, by constructing a plurality of labels in a training sample corresponding to an object according to a unified strategy, a feature learning deviation between a user whose conversion behavior is trackable and a user whose conversion behavior is untrackable can be avoided. Also, the training sample is constructed with the union of the dataset 310 and the dataset 320, and it may be determined that only one training sample is constructed for one object to represent the click behavior and the conversion behavior of the object on a certain recommended content. This avoids the risk of overfitting due to construction of a plurality of training samples for clicking and converting of the same object respectively. Furthermore, on the basis of the dataset merging and the multi-label training sample, the training efficiency of the object feature extraction model can be remarkably improved. In addition, since the plurality of labels may respectively indicate whether each object performs a click on the recommended content, and also indicates whether to perform conversion on the recommended content (or explicitly indicates that the conversion behavior is not known), the problem of label leakage can be avoided, and the trained model performance is improved.

In some embodiments, the feature learning and application system 110 may input a plurality of test samples to the trained object feature extraction model 112 to obtain a test feature embedding corresponding to the plurality of test samples. The plurality of test samples may include a first group of test samples in which a conversion behavior of a test object is trackable and a second group of test samples in which a conversion behavior of a test object is untrackable. In other words, the attribute information of the test object in the test sample may be the same as the attribute information of the object in the training dataset, so that the generalization ability and other performance of the model may be further verified.

In some embodiments, the number of parameters in the model dense layer (Dense Layer) of the object feature extraction model 112 may be increased, so that a new parameter has better performance for a predicted conversion rate. For specific test results, refer to Table 1 below.

**Table 1**

| Performance Metric | Test Results of Baseline Multi-label Processing Logic in This Disclosure | Test Results of Optimized Multi-label Processing Logic in This Disclosure | Difference |
|---|---|---|---|
| Click-Through Rate AUC | 0.8704 | 0.87074 | 0.04% |
| Click-Through Rate RIG | 0.30708 | 0.30578 | -0.42% |
| Predicted Conversion Rate AUC | 0.8042 | 0.80362 | -0.07% |
| Predicted Conversion Rate RIG | 0.17164 | 0.1711 | -0.31% |

In Table 1 above, the baseline multi-label processing logic in the embodiments of the disclosure refers to a baseline model that does not perform optimization of the model dense layer, and the optimization multi-label processing logic in the embodiments of the disclosure refers to an object feature extraction model after performing optimization of the model dense layer. The area under curve (AUC) is defined as an area under a ROC curve and enclosed by a ROC curve and a coordinate axis, and a value of this area is not greater than 1, and the value range of AUC is between 0.5 and 1. The closer the AUC is to 1.0, the higher the authenticity of the detection method. The relative information gain (RIG) is a linear transformation of the logarithmic loss, and the better the model prediction, the larger the numerical value of the RIG should be.

In some embodiments, the feature learning and application system 110 may determine a first length distribution of a first group of feature embeddings corresponding to the first group of test samples. Thus, a mean and a standard deviation of lengths of the first group of test object feature embeddings may be counted, and the length distribution may be represented by the mean and the standard deviation.

In some embodiments, the feature learning and application system 110 may determine a second length distribution of a second group of feature embeddings corresponding to the second group of test samples. Similarly, a mean and a standard deviation of lengths of the second group of test object feature embeddings may thus be counted.

In some embodiments, based on a difference between the first length distribution and the second length distribution, the feature learning and application system 110 may determine a test result of the object feature extraction model, and the test result indicates whether the object feature extraction model passes a test. If the test result indicates that the object feature extraction model 112 passes the test, the feature extraction model 112 may be put into use. On the contrary, if the test result indicates that the object feature extraction model 112 fails to pass the test, it indicates that the feature extraction model 112 fails to achieve a predetermined effect, and needs to continue to be trained.

In some embodiments, using the trained object feature extraction model 112, the feature learning and application system 110 may extract a plurality of target embedding representations of the plurality of target objects from the attribute information of the plurality of target objects, respectively, and then determine the similarity of the plurality of target objects based on the similarity between the plurality of target embedding representations. Thus, the object feature extraction model 112 in the embodiments of the disclosure may be used to evaluate the similarity of an object (for example, a user) in, for example, a recommendation scenario or other scenarios. Specifically, by extracting feature embeddings of objects, it is possible to determine, based on a comparison of feature embeddings of multiple users, which users of the users are similar users.

In some embodiments, using the trained object feature extraction model 112, the feature learning and application system 110 may extract target embedding representations of target objects from attribute information of the target objects, respectively, and then determine a probability of providing target recommended content to the target object based on a correlation between the target embedding representation and an embedding representation of the target recommended content. Thus, the object feature extraction model 112 in the embodiments of the disclosure may be further used in the recommendation scenario to evaluate whether to send the target recommended content to a target user. Specifically, it may be determined whether to send the recommended content to the user based on the correlation between the embedding representation of the user and the embedding representation of the recommended content. If the determined probability is high, the target recommended content will be sent to this user. The user may select whether to perform a click behavior or a conversion behavior on the target recommended content according to needs.

In general, the length of the embedding representation may have a relationship with the number of samples (i.e., sample size) in the training, that is, if the more the number of samples is increasing, the mean length of the possible embedding representation changes accordingly. Table 2 and Table 3 below show examples of the normal distribution of user embedding representations in the traditional solution and the solution of the disclosure, respectively.

**Table 2 Normal Distribution of User Embedding Representations in Traditional Solution**

| | mean | Sample Size | Standard Deviation |
|---|---|---|---|
| Trackable User | 4.429184 | 889840 | 1.90 |
| Untrackable User | 5.019679 | 110160 | 2.06 |
| Difference | -0.5990495 | | |
| Variation | 13% | | |

In a conventional solution, when there is a significant difference between the number of samples of the trackable users and the number of samples of the non-trackable users, through an example testing, an average length of the embedding representation of the trackable user is 4.429184, an average length of the embedding representation of the untrackable user is 5.019679, a difference between these two average lengths is -0.5990495, and a variation therebetween is 13%.

**Table 3 Normal Distribution of User Embedding Representations in Solution of Disclosure**

| | mean | Sample Size | Standard Deviation |
|---|---|---|---|
| Trackable User | 2.8430356874783547 | 845983 | 1.1792074804227244 |
| Untrackable User | 2.915914931468604 | 154017 | 1.2694830083406248 |
| Difference | -0.07287924399024925 | | |
| Variation | -2.56% | | |

In the solution of the disclosure, under the same condition where there is a significant difference between the number of samples of the trackable users and the number of samples of the non-trackable users, through an example testing, an average length of the embedding representation of the trackable user is 2.8430356874783547, the average length of the embedding representation of the untrackable user is 2.915914931468604, a difference between the two average lengths is -0.07287924399024925, and a variation is only -2.56%.

It can be seen that the solution for feature learning according to the embodiments of the disclosure can solve the problem about a predetermined result deviation for a trackable user and a untrackable user at present. According to the embodiment of the disclosure, the model training efficiency is improved, and the effective gain for the overall performance of the model is realized. Specifically, compared with the traditional solution, the solution of the disclosure achieves better performance for model training of behavior data of the untrackable user.

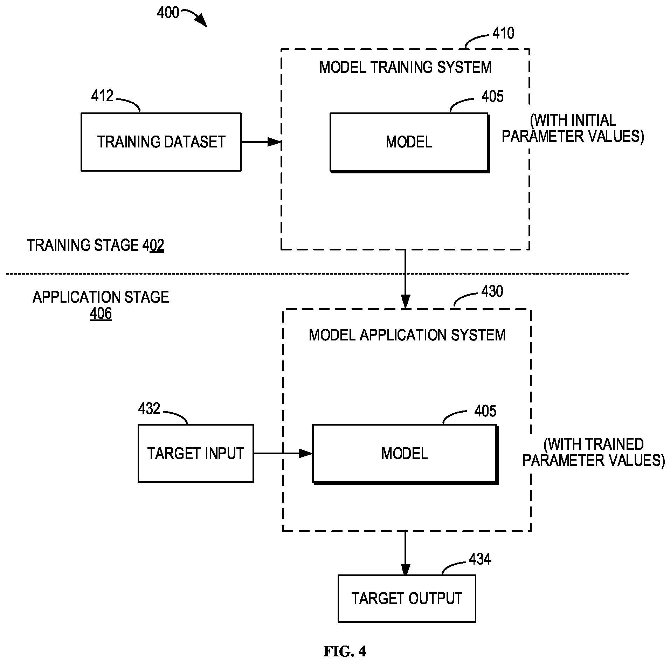

FIG. 4 illustrates a schematic diagram of a model training and application environment 400 in which embodiments of the disclosure may be implemented. In the environment 400 of FIG. 4, a model is shown generally involving different stages, including a training stage 402 and an application stage 406. After the training stage 402 is completed, there may be a testing stage, which is not shown in the figure.

In the training stage 402, a model training system 410 is configured to perform training of a model 405 with a training dataset 412. The model 405 may be, for example, a prediction model 114 and an object feature extraction model 112 in FIG. 1. At the beginning of the training, the model 405 may have an initial parameter value. The training process is to update a parameter value of the model 405 to a desired value based on the training data.

At the application stage 406, the obtained model 405 has a trained parameter value that may be provided to the model application system 430 for use. At the application stage 406, the model 405 may be utilized to process a corresponding target input 432 in an actual scenario and provide a corresponding target output 434. The model application system 430 may be configured to implement the feature learning and application system 110 of FIG. 1.

In FIG. 4, the model training system 410 and the model application system 430 may include any computing system having computing capabilities, such as various computing devices / systems, terminal devices, servers, and the like. The terminal device may relate to any type of mobile terminal, fixed terminal, or portable terminal, including a mobile phone, a desktop computer, a laptop computer, a notebook computer, a netbook computer, a tablet computer, a media computer, a multimedia tablet, or any combination thereof, including accessories and peripherals of these devices, or any combination thereof. The servers include, but are not limited to, mainframes, edge computing nodes, computing devices in a cloud environment, and the like.

It should be understood that the components and arrangements in the environment 400 shown in FIG. 4 are merely examples, and the computing system suitable for implementing the illustrative implementations described in the disclosure may include one or more different components, other components, and / or different arrangements. For example, while shown as being separate, the model training system 410 and the model application system 430 may be integrated in the same system or device. Implementations of the disclosure are not limited in this regard.

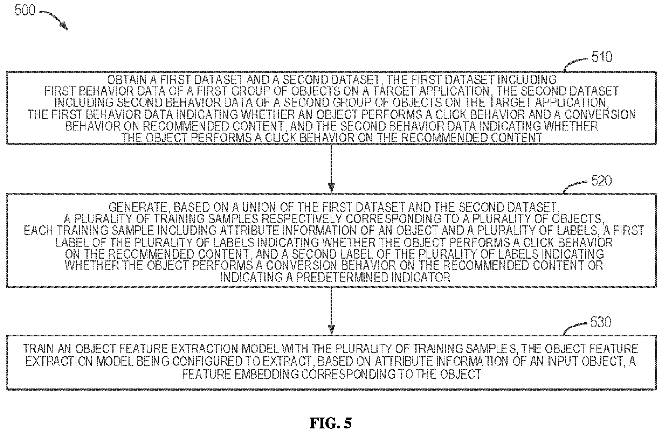

FIG. 5 illustrates a flowchart of a process 500 for feature learning according to some embodiments of the disclosure. The process 500 may be implemented, for example, at the feature learning and application system 110 of FIG. 1.

At block 510, a first dataset and a second dataset are obtained. The first dataset includes first behavior data of a first group of objects on a target application, the second dataset includes second behavior data of a second group of objects on the target application, the first behavior data indicates whether an object performs a click behavior and a conversion behavior on the recommended content, and the second behavior data indicates whether the object performs a click behavior on the recommended content.

At block 520, based on a union of the first dataset and the second dataset, a plurality of training samples corresponding to a plurality of objects are generated. Each training sample includes attribute information of an object and a plurality of labels, a first label of the plurality of labels indicates whether the object performs a click behavior on the recommended content, and a second label of the plurality of labels indicates whether the object performs a conversion behavior on the recommended content or indicates a predetermined indicator.

At block 530, an object feature extraction model is trained with the plurality of training samples, and the object feature extraction model is configured to extract, based on attribute information of an input object, a feature embedding corresponding to the object.

In some embodiments, generating, based on the union of the first dataset and the second dataset, the plurality of training samples respectively corresponding to the plurality of objects includes: determining behavior data of a first object from first behavior data of the first dataset and second behavior data of the second dataset based on an object identifier of the first object; and generating a first training sample corresponding to the first object based on the behavior data of the first object.

In some embodiments, generating the first training sample corresponding to the first object based on the behavior data of the first object includes: determining, based on the behavior data of the first object indicating whether the first object performs the click behavior on the recommended content, the first label in the first training sample corresponding to the first object; if the behavior data of the first object includes an indication of whether the first object performs a conversion behavior on the recommended content, determining the second label in the first training sample based on the indication of whether the first object performs the conversion behavior on the recommended content; and if the behavior data of the first object does not include an indication of whether the first object performs a conversion behavior on the recommended content, determining that the second label in the first training sample indicates the predetermined indicator.

In some embodiments, the predetermined indicator indicates that a conversion behavior of an object is untrackable.

In some embodiments, the process 500 further includes: inputting a plurality of test samples to the trained object feature extraction model to obtain a test feature embedding corresponding to the plurality of test samples, the plurality of test samples including a first group of test samples in which a conversion behavior is trackable and a second group of test samples in which a conversion behavior of a test object is untrackable; and determining a first length distribution of a first group of feature embeddings corresponding to the first group of test samples; determining a second length distribution of a second group of feature embeddings corresponding to the second group of test samples; and determining a test result of the object feature extraction model based on a difference between the first length distribution and the second length distribution, the test result indicating whether the object feature extraction model passes a test.

In some embodiments, the process 500 further includes: extracting a plurality of target embedding representations of a plurality of target objects from attribute information of the plurality of target objects respectively by using the trained object feature extraction model; and determining a similarity between the plurality of target objects based on a similarity between the plurality of target embedding representations.

In some embodiments, the process 500 further includes: extracting a target embedding representation of a target object from attribute information of the target object by using the trained object feature extraction model; and determining a probability of providing the target recommended content to the target object based on a correlation between the target embedding representation and an embedding representation of the target recommended content.

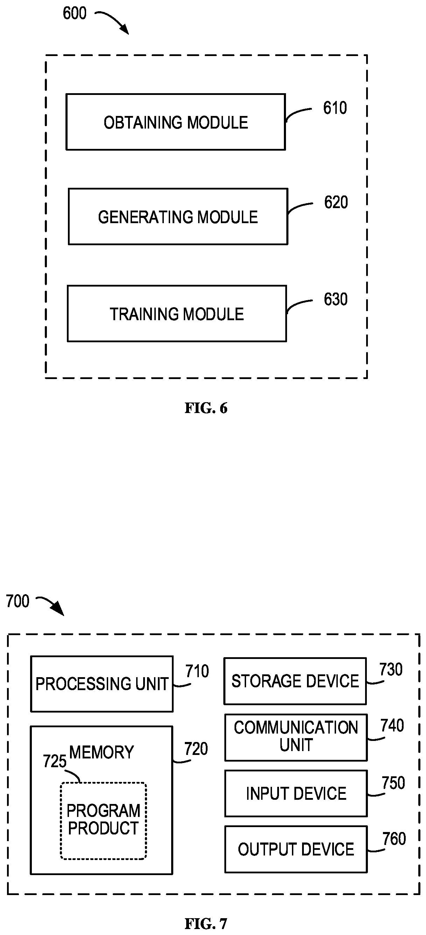

FIG. 6 illustrates a schematic structural block diagram of an apparatus 600 for feature learning according to some embodiments of the disclosure. The apparatus 600 may be implemented or included in the feature learning and application system 110. Various modules / components in the apparatus 600 may be implemented by hardware, software, firmware, or any combination thereof.

As shown, the apparatus 600 includes an obtaining module 610 configured to obtain a first dataset and a second dataset. The first dataset includes first behavior data of a first group of objects on a target application, the second dataset includes second behavior data of a second group of objects on the target application, the first behavior data indicates whether an object performs a click behavior and a conversion behavior on the recommended content, and the second behavior data indicates whether the object performs a click behavior on the recommended content.

The apparatus 600 further includes a generating module 620 configured to generate, based on a union of the first dataset and the second dataset, a plurality of training samples respectively corresponding to a plurality of objects. Each training sample includes attribute information of an object and a plurality of labels, a first label of the plurality of labels indicates whether the object performs a click behavior on the recommended content, and a second label of the plurality of labels indicates whether the object performs a conversion behavior on the recommended content or indicates a predetermined indicator.

The apparatus 600 further includes a training module 630 configured to train an object feature extraction model with the plurality of training samples. The object feature extraction model is configured to extract, based on attribute information of an input object, a feature embedding corresponding to the object.

In some embodiments, the generating module 620 is further configured to determine behavior data of a first object from first behavior data of the first dataset and second behavior data of the second dataset based on an object identifier of the first object; and generate a first training sample corresponding to the first object based on the behavior data of the first object.

In some embodiments, the generating module 620 is further configured to determine, based on the behavior data of the first object indicating whether the first object performs the click behavior on the recommended content, the first label in the first training sample corresponding to the first object; if the behavior data of the first object includes an indication of whether the first object performs a conversion behavior on the recommended content, determine the second label in the first training sample based on the indication of whether the first object performs the conversion behavior on the recommended content; and if the behavior data of the first object does not include an indication of whether the first object performs a conversion behavior on the recommended content, determine that the second label in the first training sample indicates a predetermined indicator.

In some embodiments, the predetermined indicator indicates that a conversion behavior of an object is untrackable.

In some embodiments, the apparatus 600 further includes a first extraction module configured to input a plurality of test samples to the trained object feature extraction model to obtain a test feature embedding corresponding to the plurality of test samples. The plurality of test samples includes a first group of test samples in which a conversion behavior of a test object is trackable and a second group of test samples in which a conversion behavior of a test object is untrackable; and determine a first length distribution of a first group of feature embeddings corresponding to the first group of test samples; determine a second length distribution of a second group of feature embeddings corresponding to the second group of test samples; and determine a test result of the object feature extraction model based on a difference between the first length distribution and the second length distribution, the test result indicating whether the object feature extraction model passes a test.

In some embodiments, the apparatus 600 further includes a second extraction module configured to extract a plurality of target embedding representations of a plurality of target objects from attribute information of the plurality of target objects respectively by using the trained object feature extraction model; and determine a similarity of the plurality of target objects based on a similarity between the plurality of target embedding representations.

In some embodiments, the apparatus 600 further includes a third extraction module configured to extract a target embedding representation of a target object from attribute information of the target object by using the trained object feature extraction model, and determine a probability of providing the target recommended content to the target object based on a correlation between the target embedding representation and an embedding representation of the target recommended content.

FIG. 7 illustrates a block diagram of an electronic device 700 in which one or more embodiments of the disclosure may be implemented. It should be understood that the electronic device 700 illustrated in FIG. 7 is merely illustrative and should not constitute any limitation on the functionality and scope of the embodiments described herein. The electronic device 700 shown in FIG. 7 may be configured to implement the feature learning and application system 110. The electronic device 700 may include or be implemented as the device 600 of FIG. 6.

As shown in FIG. 7, the electronic device 700 is in the form of a general-purpose computing device. Components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and capable of performing various processes according to programs stored in the memory 720. In a multiprocessor system, a plurality of processing units executes computer-executable instructions in parallel to improve the parallel processing capability of the electronic device 700.

The electronic device 700 generally includes a plurality of computer storage media. Such media may be any available media that is accessible by the electronic device 700, including, but not limited to, volatile and non-volatile media, removable and non-removable media. The memory 720 may be a volatile memory (e.g., a register, a cache, a random access memory (RAM)), a non-volatile memory (e.g., a read-only memory (ROM), an electrically erasable programmable read-only memory (EEPROM), a flash memory), or some combination thereof. The storage device 730 may be a removable or non-removable medium and may include a machine-readable medium, such as a flash drive, a magnetic disk, or any other medium, which may be capable of storing information and / or data (e.g., training data for training) and may be accessed within the electronic device 700.

The electronic device 700 may further include additional removable / non-removable, volatile / non-volatile storage media. Although not shown in FIG. 7, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 720 may include a computer program product 725 having one or more program modules configured to perform various methods or actions of various embodiments of the disclosure.

The communication unit 740 is configured to communicate with another electronic device through a communication medium. Additionally, the functionality of components of the electronic device 700 may be implemented in a single computing cluster or multiple computing machines capable of communicating over a communication connection. Thus, the electronic device 700 may operate in a networked environment using logical connections with one or more other servers, a network personal computer (PC), or another network node.

The input device 750 may be one or more input devices such as a mouse, a keyboard, a trackball, or the like. The output device 760 may be one or more output devices, such as a display, a speaker, a printer, or the like. The electronic device 700 may also communicate with one or more external devices (not shown) through the communication unit 740 as needed, the external device such as a storage device, a display device, etc., communicates with one or more devices that enable a user to interact with the electronic device 700, or communicates with any device (e.g., a network card, a modem, etc.) that enables the electronic device 700 to communicate with one or more other electronic devices. Such communication may be performed via an input / output (I/O) interface (not shown).

According to example implementations of the disclosure, there is provided a computer-readable storage medium having computer-executable instructions stored thereon, wherein the computer-executable instructions are executed by a processor to implement the method described above. According to example implementations of the disclosure, a computer program product is further provided, the computer program product being tangibly stored on a non-transitory computer-readable medium and including computer-executable instructions, and the computer-executable instructions being executed by the processor to implement the method described above.

Aspects of the disclosure are described herein with reference to flowcharts and / or block diagrams of a method, an apparatus, a device, and a computer program product implemented in accordance with the disclosure. It should be understood that each block of the flowchart and / or block diagram, and combinations of blocks in the flowchart(s) and / or block diagram(s), may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions / acts specified in one or more blocks in the flowchart(s) and / or block diagram(s). These computer-readable program instructions may also be stored in a computer-readable storage medium that cause the computer, programmable data processing apparatus, and / or other devices to function in a particular manner, such that the computer-readable medium storing instructions includes an article of manufacture including instructions to implement aspects of the functions / acts specified in one or more blocks in the flowchart(s) and / or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on the computer, other programmable data processing apparatus, or other apparatus implement the functions / acts specified in one or more blocks in the flowchart(s) and / or block diagram(s).

The flowchart and block diagrams in the figures show an architecture, functionality, and operation that may be possibly implemented by a system, a method, and a computer program product according to various implementations of the disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagram(s) and / or flowchart(s), as well as combinations of blocks in the block diagram(s) and / or flowchart(s), may be implemented with a dedicated hardware-based system that performs the specified functions or actions, or may be implemented in a combination of dedicated hardware and computer instructions.

Various implementations of the disclosure have been described above, which are illustrative, not exhaustive, and are not limited to the implementations disclosed. Many modifications and variations will be apparent to those of ordinary skill in the art without departing from the scope and spirit of various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of feature learning, comprising:
obtaining a first dataset and a second dataset, the first dataset comprising first behavior data of a first group of objects on a target application, the second dataset comprising second behavior data of a second group of objects on the target application, the first behavior data indicating whether an object performs a click behavior and a conversion behavior on recommended content, and the second behavior data indicating whether the object performs a click behavior on the recommended content;
generating, based on a union of the first dataset and the second dataset, a plurality of training samples respectively corresponding to a plurality of objects, each training sample comprising attribute information of an object and a plurality of labels, a first label of the plurality of labels indicating whether the object performs a click behavior on the recommended content, and a second label of the plurality of labels indicating whether the object performs a conversion behavior on the recommended content or indicating a predetermined indicator; and
training an object feature extraction model with the plurality of training samples, the object feature extraction model being configured to extract, based on attribute information of an input object, a feature embedding corresponding to the object.

2. The method of claim 1, wherein generating, based on the union of the first dataset and the second dataset, the plurality of training samples respectively corresponding to the plurality of objects comprises:
determining behavior data of a first object from first behavior data of the first dataset and second behavior data of the second dataset based on an object identifier of the first object; and
generating a first training sample corresponding to the first object based on the behavior data of the first object.

3. The method of claim 2, wherein generating the first training sample corresponding to the first object based on the behavior data of the first object comprises:
determining, based on the behavior data of the first object indicating whether the first object performs the click behavior on the recommended content, the first label in the first training sample corresponding to the first object;
determining, in accordance with the behavior data of the first object comprising an indication of whether the first object performs a conversion behavior on the recommended content, the second label in the first training sample based on the indication of whether the first object performs the conversion behavior on the recommended content;
determining, in accordance with the behavior data of the first object failing to comprise an indication of whether the first object performs a conversion behavior on the recommended content, that the second label in the first training sample indicates the predetermined indicator.

4. The method of claim 1, wherein the predetermined indicator indicates that a conversion behavior of an object is untrackable.

5. The method of claim 1, further comprising:
inputting a plurality of test samples to the trained object feature extraction model to obtain a test feature embedding corresponding to the plurality of test samples, the plurality of test samples comprising a first group of test samples in which a conversion behavior of a test object is trackable and a second group of test samples in which a conversion behavior of a test object is untrackable; and
determining a first length distribution of a first group of feature embeddings corresponding to the first group of test samples;
determining a second length distribution of a second group of feature embeddings corresponding to the second group of test samples;
determining a test result of the object feature extraction model based on a difference between the first length distribution and the second length distribution, the test result indicating whether the object feature extraction model passes a test.

6. The method of claim 1, further comprising:
extracting a plurality of target embedding representations of a plurality of target objects from attribute information of the plurality of target objects respectively by using the trained object feature extraction model; and
determining a similarity between the plurality of target objects based on a similarity between the plurality of target embedding representations.

7. The method of claim 1, further comprising:
extracting a target embedding representation of a target object from attribute information of the target object by using the trained object feature extraction model; and
determining a probability of providing the target recommended content to the target object based on a correlation between the target embedding representation and an embedding representation of the target recommended content.

8. An apparatus for feature learning, comprising:
an obtaining module configured to obtain a first dataset and a second dataset, the first dataset comprising first behavior data of a first group of objects on a target application, the second dataset comprising second behavior data of a second group of objects on the target application, the first behavior data indicating whether an object performs a click behavior and a conversion behavior on the recommended content, and the second behavior data indicating whether the object performs a click behavior on the recommended content;
a generating module configured to generate, based on a union of the first dataset and the second dataset, a plurality of training samples respectively corresponding to a plurality of objects, each training sample comprising attribute information of an object and a plurality of labels, a first label of the plurality of labels indicating whether the object performs a click behavior on the recommended content, and a second label of the plurality of labels indicating whether the object performs a conversion behavior on the recommended content or indicating a predetermined indicator; and
a training module configured to train an object feature extraction model with the plurality of training samples, the object feature extraction model being configured to extract, based on attribute information of an input object, a feature embedding corresponding to the object.

9. An electronic device, comprising:
at least one processing unit; and
at least one memory coupled to the at least one processing unit and storing instructions for execution by the at least one processing unit, the instructions, when executed by the at least one processing unit, causing the device to perform the method of any of claims 1 to 7.

10. A computer-readable storage medium having stored thereon a computer program, the computer program, when executed by a processor, implementing the method of any of claims 1 to 7.

11. A computer program product tangibly stored in a computer storage medium and comprising computer-executable instructions that, when executed by a device, cause the device to perform the method of any of claims 1 to 7.
